# EUROPEAN PATENT APPLICATION

(11) **EP 0 693 751 A1**
(43) Date of publication of application: **24.01.1996**
(21) Application number: 95108687.5
(22) Date of filing: 07.06.1995
(51) Int. Cl.: G11B 33/04

(54) **Container particularly for computer diskettes**

(30) Priority: 22.07.1994 IT MI941550
(71) Applicant: MAS PLAST S.r.l., I-42100 Reggio Emilia (IT)
(72) Inventor: Balzarini, Vittorio, I-26100 - Cremona (IT)
(74) Representative: Forattini, Amelia

(57) **Abstract**

A container for computer diskette that includes a box-like body and a lid (3). The box-like body includes a front half-shell (7) that is pivoted to a rear half-shell (5) so as to define at least two positions, namely a closed position and a divaricated position. The lid is able to oscillate with respect to the box-like body so as to define at least three positions: a closed position; a first open position, in which the lid acts as support for the box-like body in a front position; and a second open position, in which the lid acts as support for the box-like body in a rear position with respect to the box-like body.

## Description

The present invention relates to a container particularly for computer diskettes.

Portable containers for computer diskettes are known; they generally include a box-like body that is closed by a lid. These containers are used not only for transporting the diskettes but most of all as support for them, so that they can be easily accessed during work.

For this purpose, in some containers the lid can rotate through approximately 270° so as to become the base of the container during work. In order to access the diskettes more easily, containers have also been proposed in which the box-like body includes at least one front portion that is pivoted so as to slightly divaricate the box-like body.

In conventional containers, however, these characteristics are achieved at the price of considerable structural complications that make the containers relatively expensive and complex from the point of view of production. Furthermore, none of the known containers combines all the required advantageous characteristics: stability, easy access to the diskettes, easy opening of the container, simple construction and therefore low cost. This occurs because in known containers these characteristics are achieved with structures and solutions that are mutually incompatible.

The aim of the present invention is to provide a container, particularly for computer diskettes, with improved accessibility and stability achieved with a simplified structure.

Within the scope of this aim, an object of the invention is to provide a container that is mechanically stronger and more reliable than known containers.

This aim, this object, and others which will become apparent hereinafter are achieved by a container, particularly for computer diskettes, characterized in that it comprises a box-like body and a lid; the box-like body includes a front half-shell pivoted to a rear half-shell so as to define at least two positions, namely a closed position and a divaricated position; the lid is able to swing with respect to the box-like body so as to define at least three positions: a closed position; a first open position, in which the lid acts as support for the box-like body in a front position; and a second open position, in which the lid acts as support for the box-like body in a rear position with respect to the box-like body.

Further characteristics and advantages will become apparent from the description of a preferred but not exclusive embodiment of the invention, illustrated only by way of non-limitative example in the accompanying drawings, wherein:

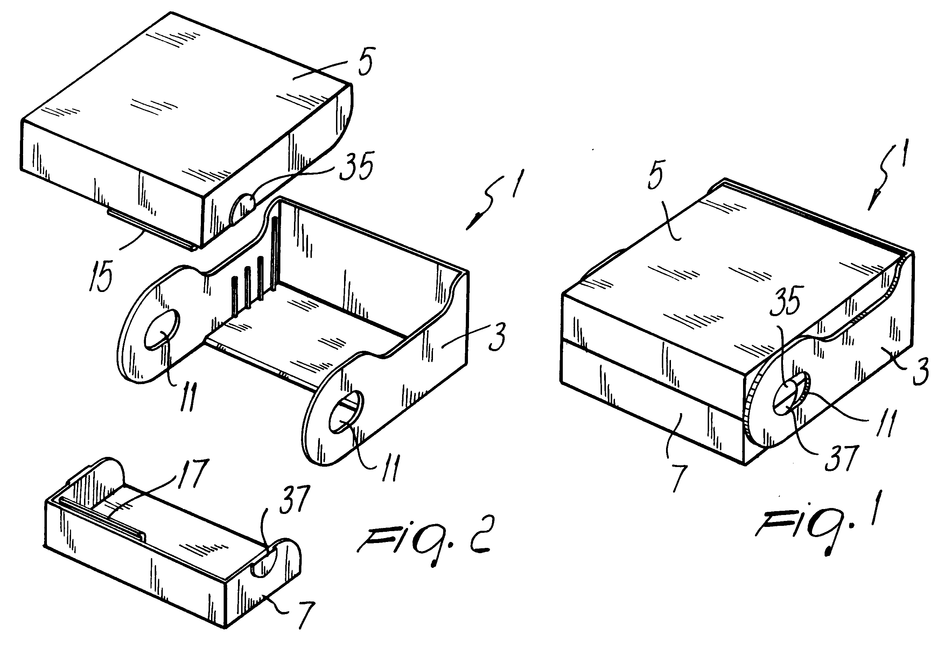

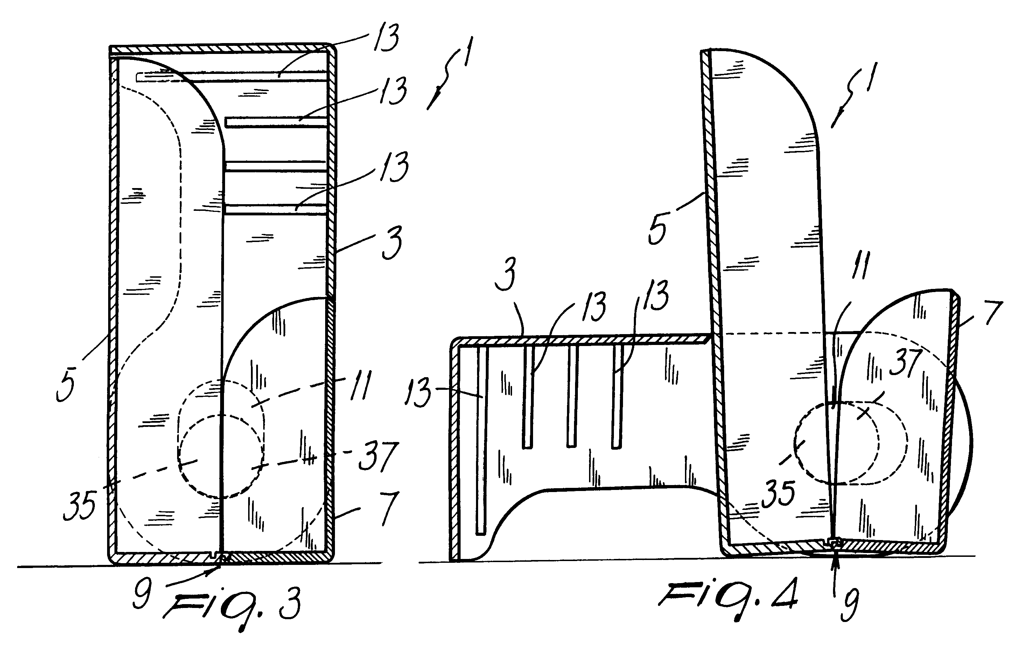

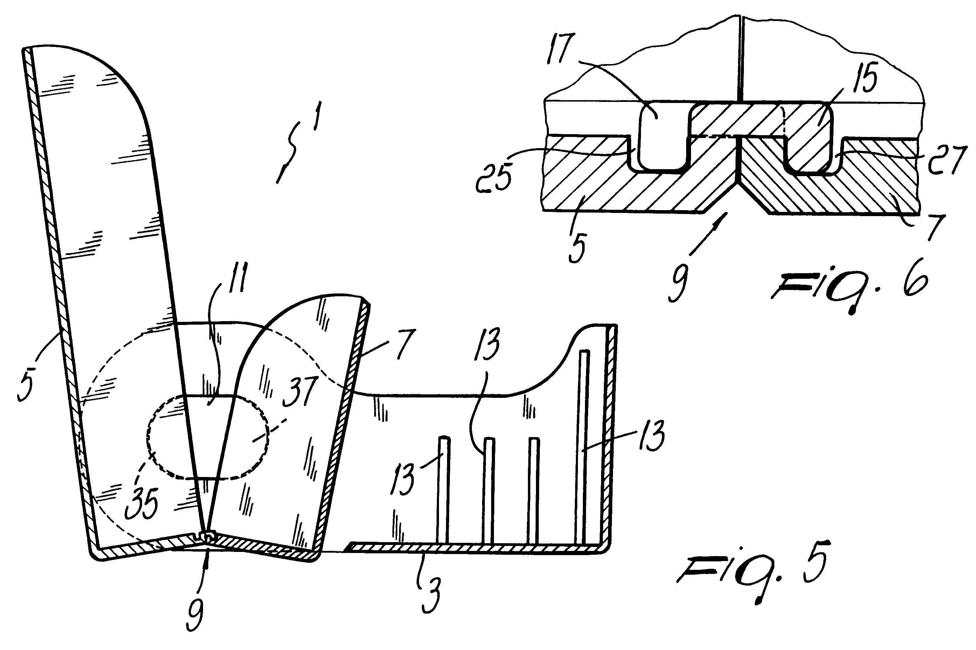

Figure 1 is a perspective view of the container according to the invention;
Figure 2 is an exploded perspective view of the container;
Figure 3 is a side sectioned view of the container in closed position;
Figure 4 is a view, similar to the preceding one, showing the container in the second open position;
Figure 5 is a view, similar to the preceding one, showing the container in the first open position;
Figure 6 is an enlarged-scale partial sectional view of the hinge means that is suitable to connect the two half-shells of the box-like body;
Figure 7 is a perspective view of the container according to another aspect of the invention;
Figure 8 is a partial sectional view, taken along the plane VIII-VIII of Figure 7;
Figure 9 is a partial sectional view, taken along the plane IX-IX of Figure 7;
Figure 10 is a partial side view of the hinge of the container of Figures 7-9.

With reference to the above figures, the container according to the invention, generally designated by the reference numeral 1, includes a box-like body, associated with a lid 3, and constituted by a rear half-shell 5 pivoted to a front half-shell 7. The height of the rear half-shell 5 is substantially equal to the total height of the box-like body, whereas the front half-shell 7 is lower and is pivoted to the rear half-shell by a hinge means 9. The hinge means 9 is advantageously constituted by an L-shaped part 15, which is associated with the leading edge of the rear half-shell 5 and the free end of which is suitable to be accommodated in a slot 27 of the front half-shell 7. The front half-shell 7 likewise has an L-shaped part 17. The free end of part 17 is arranged in a slot 25 formed on the rear half-shell 5.

The half-shells 5 and 7 are also provided with a semicircular part, respectively 35 and 37 on either side. These parts are suitable to constitute a pivot that is inserted in an eyelet 11 formed on either side of the lid 3.

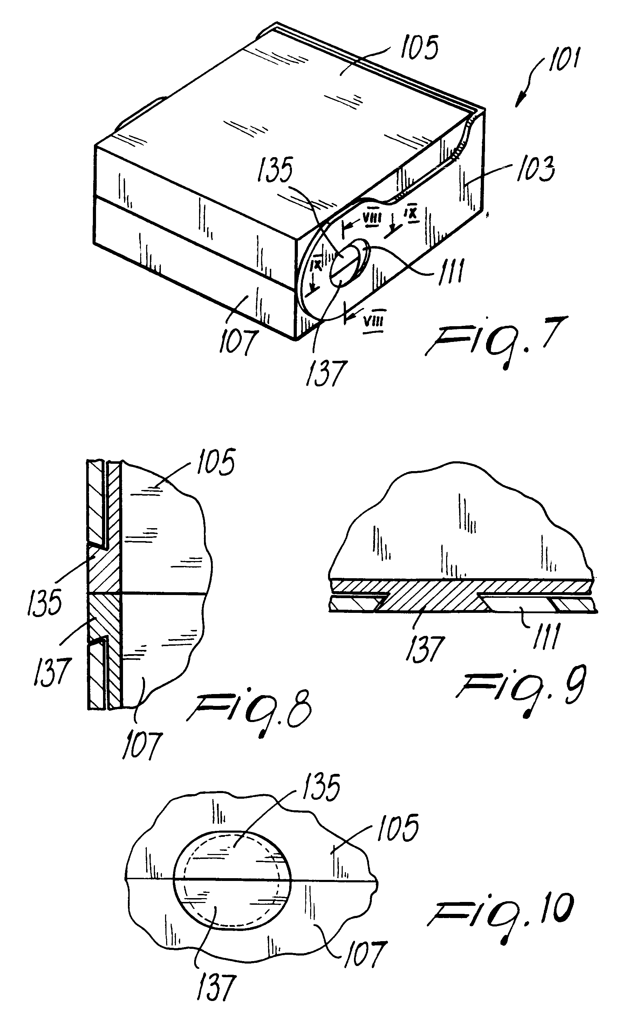

The eyelet 11 has an oval configuration, so that when the lid 3 is in closed position (arranged vertically in Figure 3) any mutual movement of the two half-shells is prevented, whereas when the lid 3 is in an open position (arranged horizontally, in Figures 4 and 5), the half-shells can freely divaricate to make it easier to grip the diskettes contained in the box-like body. Advantageously, the lid 3 has a series of ridges 13 formed on either internal side of the lid, so that when the lid is in the front open position (Figure 5) these ridges act as temporary supports for the diskettes. The use of the container is apparent: in the closed position it is possible to carry and store the diskettes, which are protected against dust and impacts. If one has to use the diskettes, it is sufficient to open the container, placing the lid 3 in the front open position (Figure 5) or in the rear open position (Figure 4). The diskettes can be accessed easily in both open positions, since the front half-shell divaricates enough to make it easier to grip the diskettes. In the front open position, the lid also acts as temporary support, for the diskettes that are used most frequently, by means of ridges 13.

Figures 7-10 illustrate a container 101 according to a further aspect of the invention. The container 101 is substantially identical to the container 1 described above, except for the shape of the semicircular parts 135 and 137, which are suitable to constitute the pivot inserted in the eyelet 111 formed on either side of the lid 103.

The semicircular parts 135 and 137 are formed respectively on the rear half-shell 105 and on the front half-shell 107, as in the above described embodiment. As clearly shown by Figures 8 and 9, the semicircular parts have a conical shape and are suitable to engage the eyelet 111, which is also conical.

This embodiment offers greater resistance to the mutual disengagement of the half-shells and the lid while offering the same ease of use of the container.

In practice it has been observed that the invention achieves the intended aim and objects, providing a container that is constructively very simple and cheap and at the same time easy and simple to use. An important advantage of the invention is due to the hinge means 9, which allows to pivot the two half-shells with a structure that is constructively simple and reliable and extremely advantageous with respect to the known art. Another important advantage is due to the system that connects the lid and the box-like body, which allows, with a very simple structure, both to divaricate the half-shell and to position the lid at the front or at the rear, according to the requirements.

The container according to the invention is susceptible of numerous modifications and variations, all of which are within the scope of the inventive concept; all the details may furthermore be replaced with technically equivalent parts. The materials employed, as well as the dimensions, may of course be any according to the requirements and the state of the art.

## Claims

1. Container, particularly for computer diskettes, characterized in that it comprises a box-like body and a lid (3), said box-like body comprising a front half-shell (7) pivoted to a rear half-shell (5) so as to define at least two positions, namely a closed position and a divaricated position, said lid (3) being able to swing with respect to said box-like body so as to define at least three positions: a closed position; a first open position, in which said lid acts as support for said box-like body in a front position; and a second open position, in which said lid acts as support for said box-like body in a rear position with respect to said box-like body.

2. Container according to claim 1, characterized in that said front half-shell (7) is pivoted to said rear half-shell (5) by a hinge means (9), said hinge means comprising an L-shaped part (15) associated with the leading edge of said rear half-shell, said L-shaped part having a free end that is suitable to be accommodated in a slot (27) of said front half-shell, said front half-shell having an L-shaped part (17) that has a free end suitable to be accommodated inside a slot (25) formed on said rear half-shell.

3. Container according to claim 1 or 2, characterized in that on either side said half-shells (5, 7, 105, 107) have a semicircular part (35, 37, 135, 137) that is suitable to constitute a pivot that is inserted in an eyelet (11, 111) formed on either side of said lid (3), said eyelet having an oval configuration, so that when said lid is in closed position any mutual movement of said half-shells (5, 7, 105, 107) is prevented, whereas when said lid is in an open position said half-shells (5, 7, 105, 107) can divaricate freely to make it easier to grip the diskettes contained in said box-like body.

4. Container according to one or more of the preceding claims, characterized in that said lid (3) has a series of ridges (13) that are formed on either internal side of said lid so that when said lid is in said front open position said ridges act as temporary supports for the diskettes.

5. Container according to one or more of the preceding claims, characterized in that said front half-shell (7) is lower than said rear half-shell (5).

6. Container according to one or more of the preceding claims, characterized in that said semicircular parts (135, 137) and said eyelet (111) have a conical shape.
